# EUROPEAN PATENT SPECIFICATION

(11) **EP 1 723 628 B1**
(45) Date of publication and mention of the grant of the patent: **02.01.2008**
(21) Application number: 05703017.3
(22) Date of filing: 21.02.2005
(51) Int. Cl.: G09G 3/32, D02G 3/44, G09G 3/20

(54) **ELONGATED DISPLAY FIBERS AND DISPLAYS MADE THEREOF**
LÄNGLICHE DISPLAY-FASERN UND DARAUS HERGESTELLTE DISPLAYS
FIBRES ALLONGEES POUR AFFICHAGE ET AFFICHEUR LES COMPRENANT

(30) Priority: 02.03.2004 EP 04100819
(43) Date of publication of application: 22.11.2006
(73) Proprietor: Koninklijke Philips Electronics N.V., 5621 BA Eindhoven (NL)
(72) Inventor: VAN DER TEMPEL, Leendert, NL-5656 AA Eindhoven (NL)
(74) Representative: Damen, Daniel Martijn
(86) International application number: PCT/IB2005/050631
(87) International publication number: WO 2005/088597

(56) References cited:
- US-B1- 6 259 838
- US-B1- 6 259 846

## Description

### BACKGROUND OF THE INVENTION

### Field of the Invention

The present patent application relates to the field of elongated display fibers, and displays comprising a plurality of such elongated display fibers.

### DESCRIPTION OF THE RELATED ART

Electronic displays are used to present to a user various forms of display information, such as text, graphics, and video, as pixelized images. The presentation of pixelized display information may be an essential function of an electronic device, such as usually is the case with personal computers. Pixelized display information can also be used to enhance the features of an electronic device, such as enabling interaction between a user and an electronic device.

A number of electronic display technologies are available, each having specific attributes that limit their application. Cathode Ray Tubes (CRTs), for instance, are widely used for computer monitors and televisions. CRTs have good color, contrast, and brightness, as well as being a mature, economical technology. CRTs are not particularly compact, being limited by the geometries imposed by its electron gun and pixel elements formed at substantially perpendicular relation to the electron gun. Moreover, the vacuum requirements of a CRT dictate a heavy glass construction. Thus, the size, weight, rigid fragile construction, high acceleration voltages and power consumption of CRTs limits their use in portable applications.

As an alternative to CRTs, plasma screen technology allows for a display flatter and wider than CRTs and rear projection televisions. However, plasma screen technology is difficult to manufacture, and thus expensive. Moreover, although flatter than CRTs, plasma screens have similar limitations as do CRTs for high drive voltages weight and rigidity. Consequently, plasma screen displays are used in certain notebook computers and relatively expensive portable devices.

Various other technologies allow for flat, lighter weight, and lower power consumption than CRTs, appropriate to more portable applications. Liquid Crystal Displays (LCD) and active matrix LCDs (AMLCD) are e.g. widely used in notebook computers and personal digital assistant (PDA) products. To provide a degree of flexibility and resistance to impact, plastic LCDs are known. Although LCDs are generally less expensive than other displays of comparable size they are however generally too expensive to incorporate into limited life, disposable electronic products.

Previously known patent publication US 6 259 838 B1 relates to a display as for images and/or information which comprises a plurality of linearly addressed light-emitting fibers disposed in side-by-side arrangement to define a viewing surface. Each light-emitting fiber includes a plurality of light-emitting elements disposed along its length which is linearly addressed by signals provided by a drive circuit at one end thereof. Linear addressing signals are either optical signals or electrical signals, and may be frequency modulated, digitally encoded or analog encoded. A detector associated with each pixel detects the linear addressing signal and decodes it to activate and deactivate organic or inorganic light-emitting material elements. Thus, the light-emitting elements emit light to display a pixel or sub-pixel of the image and/or information. The light-emitting fiber may include a transparent fiber as substrate for propagating the optical signals there through and may include electrical conductors disposed along its length for propagating the electrical signals.

A drawback of the above described display according to US 6 259 838 B1 is that the fiber must be equipped with a plurality of detectors, one associated with each pixel. This document discloses the features in the preamble of claim 1.

These detectors are necessary for detecting the linear addressing signals, and also needed to be able to decode the detected signals and provide for activation or deactivation of the associated light emitting elements. Thus this adds to the complexity of the fiber, which renders it more complicated to produce and increases the costs associated therewith.

Accordingly, there is a need for a light weight, low voltage, inexpensive display element having few connections, which display element can be produced more economically and which is suitable for use in displays for portable electronic devices and a variety of applications.

US 6 259 846 discloses another display comprising a plurality of light emitting fibers disposed side by side to define a viewing surface. A first electrode of each light emitting element is disposed along the length of the fiber.

### SUMMARY OF THE INVENTION

Taking the above into mind, it is an object of the present invention to provide an improved display fiber comprising a plurality of electro luminescent pixel elements distributed along the length of said fiber, by which a light weight, inexpensive display element, which can be produced economically, requires a low number of connections and drivers, and which is suitable for use in displays for portable electronic devices as well as wearable displays and a variety of applications can be achieved.

This object is achieved in accordance with the characterizing portion of claim 1.

Thanks to the provision of an electrical conductor matrix consisting of intersecting row and column conductors disposed along the length of said fiber; an electrical connection between each said intersection of said row and column conductors and a respective one of said electro luminescent pixel elements, each respective said electro luminescent pixel element can be caused to emit light through selective application of electrical signals to a respective combination of one of said row conductors and one of said column conductors.

Preferred embodiments are listed in the dependent claims.

Through a respective electrical connection to each of said row and column conductors being brought to at least one end of said fiber, attachment of driver means to the at least one fiber end is facilitated.

Through said electrical conductor matrix being of a transparent material, preferably indium tin oxide (ITO), any visually disturbing effects which might occur when using a non-transparent electrical conductor matrix is eliminated and the quality and clarity of the display fiber is improved.

Through said electrical conductor matrix being slanted around said fiber, preferably at a slanting angle close to 180° a display matrix comprising a large number of pixel elements in each row thereof can be achieved, reducing the number of electrical connections necessary to address all pixel elements of the fiber.

Through said fiber being a polymer fiber, a flexible fiber suitable for flexible displays, such as for wearable applications can be achieved.

A display apparatus comprising at least one elongated display fiber can be achieved through associating display driver means with the display fiber.

An increased size viewing surface of the display apparatus can be achieved through disposing a plurality of display fibers, each with associated display driver means, in a side by side arrangement.

In order to provide a structurally defined viewing surface the display apparatus can be provided with a substrate on which said plurality of fibers are disposed in side by side arrangement.

A viewing surface of the display apparatus providing for improved quality image reproduction can be achieved through disposing the fibers as an array of essentially parallel fibers making up the viewing surface.

In order to enable use of the display apparatus for providing a viewing surface on garments and various other textile like applications the fibers can be disposed in the warp or weft of a fabric.

In an alternative for enabling use of the display apparatus for providing a viewing surface on garments and various other textile like applications the fibers can be disposed as meandering fibers in a fabric.

### BRIEF DESCRIPTION OF THE DRAWINGS

In the drawings, wherein like reference characters denote similar elements throughout the several views:
Fig. 1 discloses a schematic view of a display fiber in accordance with the present invention;
Fig. 2 discloses a schematic view of a first embodiment of a display apparatus in accordance with the present invention;
Fig. 3 discloses a schematic view of a second embodiment of a display apparatus in accordance with the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### DETAILED DESCRIPTION OF THE PRESENTLY PREFERRED EMBODIMENTS

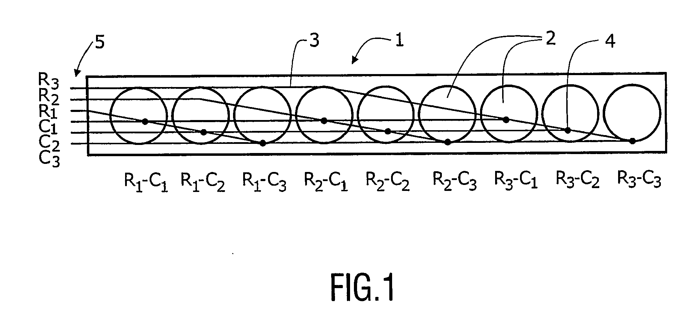

Fig. 1 shows a first embodiment of an elongated display fiber 1. The fiber 1 is preferably a weavable and wearable polymer fiber 1, of which it is possible to produce a textile like fabric. The fiber 1 comprises a plurality of electro luminescent pixel elements 2 distributed along the length thereof.

In accordance with the first embodiment of an elongated display fiber 1 in accordance with the present invention the fiber 1 further comprises an electrical conductor matrix 3 consisting of intersecting row R₁-Rₙ and column C₁-Cₙ conductors disposed along the length of the fiber 1 for conducting electrical signals along the fiber 1. An electrical connection 4 is provided between each intersection of row R₁-Rₙ and column C₁-Cₙ conductors and a respective one of the electro luminescent pixel elements 2. Each such electrical connection 4 can e.g. comprise a pair of first and second electrodes (not shown) one of which connects the associated row conductor R₁-Rₙ and the other one connecting the associated column conductor C₁-Cₙ with the associated electro luminescent pixel element 2. Each respective electro luminescent pixel element 2 can be caused to emit light through selective application of electrical signals to a respective combination of one of the row conductors R₁-Rₙ and one of the column conductors C₁-Cₙ. E.g. in figure 1, application of electrical signals to the combination of row conductor R₂ and column conductor C₁ will cause the fourth electro luminescent pixel element 2 (counting left to right) to emit light.

A respective electrical connection 5 to each of the row R₁-Rₙ and column C₁-Cₙ conductors of the electrical conductor matrix 3 is preferably brought to at least one end of the fiber 1 in order to facilitate the attachment of driver means (not shown) to the at least one fiber end in order to provide for sequential addressing of each of the pixel elements 2 through selective application of electrical signals to the respective combination of a row conductor Rₙ and a column conductor Cₙ connected to the pixel element 2 at the intersection 4 between this pair Rₙ, Cₙ of conductors.

The number of electrical connections 5 brought to the at least one end of the fiber 1 corresponds to two times the square root of the number of electro luminescent pixel elements 2 disposed along the length of the display fiber 1, e.g. as illustrated in figure 1, the number of pixel elements 2 are nine, the square root of which equals three, giving the number of connections 5 as six. This means that an elongated display fiber 1 in accordance with this first embodiment of the present invention having 256 pixel elements 2 would require 32 connections 5, and an elongated display fiber 1 in accordance with this first embodiment of the present invention having 625 pixel elements 2 would require 50 connections 5. Accordingly a factor limiting the maximum number of pixel elements 2 of an elongated display fiber 1 in accordance with this first embodiment of the present invention will be the dimension requirements of the conductors R₁-Rₙ, C₁-Cₙ of the electrical conductor matrix 3.

It is preferred that the electrical conductor matrix 3 consist of a transparent material and preferably the electrical conductor matrix 3 consist of indium tin oxide (ITO) conductors R₁-Rₙ, C₁-Cₙ and electrodes (not shown). Through the use of a transparent electrical conductor matrix 3 any visually disturbing effects which might occur when using a non-transparent electrical conductor matrix 3 is eliminated and the quality and clarity of the display fiber 1 is improved. The electrical conductor matrix 3 may be protected by at least one coating, e.g. a semi-transparent coating. Further, the electrical conductor matrix 3 is preferably wrapped around said fiber 1 slanted, with a slanting angle which for a fiber 1 comprising a large number of pixel elements 2 typically will be close to 180°, i.e. if the column conductors C₁-Cₙ extend essentially parallel to a center axis of the display fiber 1 the angle between them and the row conductors R₁-Rₙ will decrease towards 0° with the number of pixel elements 2 of each row, the limiting factor being the requirement of spacing between the conductors R₁-Rₙ, C₁-Cₙ and the requirement of each row conductor R₁-Rₙ intersecting all column conductors C₁-Cₙ.

For applications where said elongated display fiber 1 is used in a configuration where it is rotation fixed it can further comprise a back reflector (not shown) covering up to approximately 180° of a circumference of said fiber 1 in order to enhance the brightness in front of the fiber 1. As an alternative, a back reflector can be arranged behind said fiber 1 in corresponding manner in order to enhance the brightness in front of the fiber 1.

The present invention shall also encompass a display apparatus 6 comprising at least one elongated display fiber 1 in accordance with the present invention as well as an associated display driver means 7.

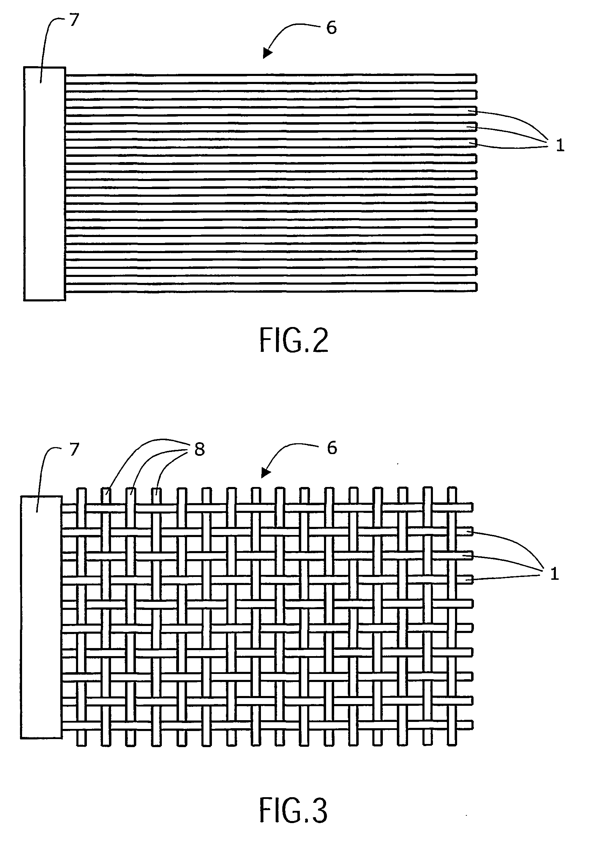

In a first embodiment, as illustrated schematically in figure 2, the display apparatus 6 comprises a plurality of elongated display fibers 1 disposed in a side by side arrangement to define a viewing surface thereof. If required for a specific application, the display fibers can be disposed on a backing substrate (not shown), which backing substrate may be a flexible substrate. The fibers 1 are preferably disposed as an array of essentially parallel fibers 1, for producing a uniform viewing surface. Each fiber 1 is associated with display driver means 7 connected to the row R₁-Rₙ and column C₁-Cₙ conductor connections 5 thereof.

In a second embodiment, as illustrated schematically in figure 3, the display apparatus 6 comprises a plurality of elongated display fibers 1 disposed in a fabric along with other fibers 8 thereof, preferably a textile fabric, defining a viewing surface thereof. The fibers 1 can be disposed in a warp or weft of the fabric or alternatively disposed as meandering fibers 1 in the fabric. As in the first embodiment, each fiber 1 is associated with display driver means 7 connected to the row R₁-Rₙ and column C₁-Cₙ conductor connections 5 thereof. The relatively low number of electrical connections 5 required using display fibers 1 in accordance with the present invention is very advantageous for producing wearable displays. The suitability for wearable displays can be further enhanced through making the electrical connections 5 flexible.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the scope of the invention as defined by the claims.

## Claims

1. An elongated display fiber (1) comprising a plurality of electro luminescent pixel elements (2) distributed along the length of said fiber (1) and a conductor arrangement for addressing the pixel elements,
**characterized in that** the conductor arrangement comprises an electrical conductor matrix (3) consisting of intersecting row (R1-Rn) and column (C1-Cn) conductors, each disposed along the length of said fiber (1),
and **in that** at each intersection of said row (R1-Rn) and column (C1-Cn) conductors an electrical connection (4) is provided from the respective row conductor and from the respective column conductor to a respective one of said electro luminescent pixel elements (2) whereby each respective electro luminescent pixel element (2) can be caused to emit light through selective application of electrical signals to a respective combination of one of said row (R1-Rn) conductors and one of said column (C1-Cn) conductors.

2. The elongated display fiber (1) of claim 1, **characterized in that** it further comprises a respective electrical connection (5) to each of said row (R1-Rn) and column (C1-Cn) conductors brought to at least one end of said fiber (1).

3. The elongated display fiber (1) of claim 1, **characterized in** said electrical conductor matrix (3) being of a transparent material, preferably indium tin oxide (ITO).

4. The elongated display fiber (1) of claim1, **characterized in** said electrical conductor matrix(3) being slanted around said fiber (1), preferably at a slanting angle close to 180 degrees.

5. The elongated display fiber (1) of any one of claims 2 to 4, **characterized in** said fiber (1) being a polymer fiber.

6. A display apparatus (6), **characterized in that** it further comprises at least one elongated display fiber (1) according to any one of the preceding claims and an associated display driver means (7).

7. The display apparatus (6) of claim 6, **characterized in that** it further comprises a plurality of said fibers (1) disposed in a side by side arrangement to define a viewing surface of said display apparatus (6).

8. The display apparatus (6) of claim 7, **characterized in that** it further comprises a substrate on which said plurality of fibers (1) are disposed in said side by side arrangement.

9. The display apparatus (6) of claim 6 **characterized in that** it further comprises a plurality of said fibers (1) disposed as an array of essentially parallel fibers (1).

10. The display apparatus (6) of claim 6 **characterized in that** it further comprises a plurality of said fibers (1) disposed in a warp or weft of a fabric.

11. The display apparatus (6) of claim 6 **characterized in that** it further comprises a plurality of said fibers (1) disposed as meandering fibers (1) in a fabric.

12. The display apparatus (6) of any one of claims 10 or 11 **characterized in** said fabric being a textile.

## Patentansprüche

1. Längliche Display-Faser (1) mit einer Vielzahl elektrolumineszierender Pixelelemente (2), die entlang der Länge der genannten Faser (1) verteilt sind, und einer Leiteranordnung zum Adressieren der Pixelelemente,
**dadurch gekennzeichnet, dass** die Leiteranordnung eine Matrix (3) elektrischer Leiter umfasst, die aus sich kreuzenden Reihen- (R₁-Rₙ) und Spalten- (C₁-Cₙ) Leitern, jeder entlang der Länge der genannten Faser (1) angeordnet, besteht,
und dass an jeder Kreuzung der genannten Reihen- (R₁-Rₙ) und Spalten-(C₁-Cₙ) Leiter eine elektrische Verbindung (4) von dem entsprechenden Reihenleiter und dem entsprechenden Spaltenleiter zu einem entsprechenden der genannten elektrolumineszierenden Pixelelemente (2) bereitgestellt ist, durch die jedes entsprechende elektrolumineszierende Pixelelement (2) durch selektives Anlegen elektrischer Signale an eine entsprechende Kombination der genannten Reihen- (R₁-Rₙ) und Spalten- (C₁-Cₙ) Leiter veranlasst werden kann, Licht zu emittieren.

2. Längliche Display-Faser (1) nach Anspruch 1, **dadurch gekennzeichnet, dass** sie weiter eine entsprechende elektrische Verbindung (5) zu jedem der genannten Reihen-(R₁-Rₙ) und Spalten- (C₁-Cₙ) Leiter umfasst, die an mindestens ein Ende der genannten Faser (1) gebracht ist.

3. Längliche Display-Faser (1) nach Anspruch 1, **dadurch gekennzeichnet, dass** die Matrix (3) elektrischer Leiter aus einem transparenten Material, vorzugsweise Indiumtitanoxid (ITO), besteht.

4. Längliche Display-Faser (1) nach Anspruch 1, **dadurch gekennzeichnet, dass** die genannte Matrix (3) elektrischer Leiter um die genannte Faser (1) herum abgeschrägt ist, vorzugsweise mit einem Neigungswinkel nahe 180 Grad.

5. Längliche Display-Faser (1) nach einem der Ansprüche 2 bis 4, **dadurch gekennzeichnet, dass** die genannte Faser (1) eine Polymerfaser ist.

6. Display-Einrichtung (6), **dadurch gekennzeichnet, dass** sie weiter mindestens eine längliche Display-Faser (1) nach einem der vorhergehenden Ansprüche und ein damit in Zusammenhang stehendes Treibermittel (7) umfasst.

7. Display-Einrichtung (6) nach Anspruch 6, **dadurch gekennzeichnet, dass** sie weiter eine Vielzahl der genannten Fasern (1) umfasst, die in einer Anordnung nebeneinander angeordnet sind, um eine Betrachtungsfläche der genannten Display-Einrichtung (6) zu definieren.

8. Display-Einrichtung (6) nach Anspruch 7, **dadurch gekennzeichnet, dass** sie weiter ein Substrat umfasst, auf dem die genannte Vielzahl von Fasern (1) in der genannten Anordnung nebeneinander angeordnet ist.

9. Display-Einrichtung (6) nach Anspruch 6, **dadurch gekennzeichnet, dass** sie weiter eine Vielzahl der genannten Fasern (1) umfasst, die als ein Array im Wesentlichen paralleler Fasern (1) angeordnet sind.

10. Display-Einrichtung (6) nach Anspruch 6, **dadurch gekennzeichnet, dass** sie weiter eine Vielzahl der genannten Fasern (1) umfasst, die in einem Kettfaden oder Schussfaden eines Stoffes angeordnet sind.

11. Display-Einrichtung (6) nach Anspruch 6, **dadurch gekennzeichnet, dass** sie weiter eine Vielzahl der genannten Fasern (1) umfasst, die als mäandernde Fasern (1) in einem Stoff angeordnet sind.

12. Display-Einrichtung (6) nach einem der Ansprüche 10 oder 11, **dadurch gekennzeichnet, dass** der genannte Stoff ein Textil ist.

## Revendications

1. Fibre d'affichage allongée (1) comprenant une pluralité d'éléments pixels électroluminescents (2) distribués selon la longueur de ladite fibre (1) et un agencement de conducteurs pour adresser les éléments pixels,
**caractérisée en ce que** l'agencement de conducteurs comprend une matrice de conducteurs électriques (3) consistant en conducteurs de rangée R1-Rn et de colonne C1-Cn entrecroisés, chacun étant disposé selon la longueur de ladite fibre (1),
et **en ce que** à chaque intersection desdits conducteurs de rangée (R1-Rn) et colonne C1-Cn, une connexion électrique (4) est prévue du conducteur de rangée respectif et du conducteur de colonne respectif vers un desdits éléments de pixels électroluminescents (2), chacun des éléments pixels électroluminescents (2) respectifs pouvant être amené à émettre de la lumière grâce à l'application sélective de signaux électriques à une combinaison d'un desdits conducteurs de rangée (R1-Rn) et d'un desdits conducteurs de colonne (C1-Cn).

2. Fibre d'affichage allongée (1) selon la revendication 1, **caractérisée en ce qu'**elle comprend en outre une connexion électrique respective (5) à chacun desdits conducteurs de rangée (R1-Rn) et de colonne (C1-Cn) amenée à au moins une des extrémités de ladite fibre (1).

3. Fibre d'affichage allongée (1) selon la revendication 1, **caractérisée en ce que** ladite matrice de conducteurs électriques (3) est faite de matériau transparent, de préférence en oxyde d'indium-étain (ITO).

4. Fibre d'affichage allongée (1) selon la revendication 1, **caractérisée en ce que** ladite matrice de conducteurs électriques (3) est en oblique autour de ladite fibre (1), de préférence avec un angle d'inclinaison proche de 180 degrés.

5. Fibre d'affichage allongée (1) selon l'une quelconque des revendications 2 à 4, **caractérisée en ce que** ladite fibre (1) est une fibre polymère.

6. Appareil d'affichage (6), **caractérisé en ce qu'**il comprend en outre au moins une fibre d'affichage allongée (1) selon l'une quelconque des revendications précédentes et un moyen pilote d'affichage associé (7).

7. Appareil d'affichage (6) selon la revendication 6, **caractérisé en ce qu'**il comprend en outre une pluralité desdites fibres (1) disposées selon un agencement côte à côte pour définir une surface de visualisation dudit appareil d'affichage (6).

8. Appareil d'affichage (6) selon la revendication 7, **caractérisé en ce qu'**il comprend en outre un support sur lequel ladite pluralité de fibres (1) est disposée selon ledit agencement côte à côté.

9. Appareil d'affichage (6) selon la revendication 6, **caractérisé en ce qu'**il comprend en outre une pluralité desdites fibres (1) agencées comme un groupement de fibres (1) essentiellement parallèles.

10. Appareil d'affichage (6) selon la revendication 6, **caractérisé en ce qu'**il comprend en outre une pluralité desdites fibres (1) agencées en ourdis ou en trame d'un tissu.

11. Appareil d'affichage (6) selon la revendication 6, **caractérisé en ce qu'**il comprend en outre une pluralité desdites fibres (1) disposées comme fibres (1) sinuant dans un tissu.

12. Appareil d'affichage (6) selon l'une quelconque des revendications 10 ou 11 **caractérisé en ce que** ledit tissu est un textile.
